# EUROPÄISCHE PATENTSCHRIFT

(11) **EP 2 567 765 B1**
(45) Veröffentlichungstag und Bekanntmachung des Hinweises auf die Patenterteilung: **13.12.2017**
(21) Anmeldenummer: 12190943.6
(22) Anmeldetag: 27.02.2009
(51) Int. Cl.: B22F 9/02, B22F 9/22, C22C 14/00, C22C 16/00, C01B 6/02, C01B 6/24, C01G 23/04, C01G 25/02, C22B 7/00, C22B 34/12, C22B 34/14, C22C 1/04, B22F 9/20, C22B 5/04, C22C 9/00, C22C 19/03, C22C 27/04

(54) **Verfahren zur Herstellung von Legierungspulvern auf der Basis von Zirkonium legiert mit Nickel**
Process for the preparation of alloy powders on the basis of zirconium alloyed with nickel
Procédé de fabrication de poudres d'alliage à base de zirconium, alliés au nickel

(30) Priorität: 28.02.2008 DE 102008000433
(43) Veröffentlichungstag der Anmeldung: 13.03.2013
(62) Teilanmeldung aus: 09714804.3
(73) Patentinhaber: Chemetall GmbH, 60487 Frankfurt am Main (DE)
(72) Erfinder: Karaca, Ahmet, 38640 Goslar (DE); Sermond, Bernd, 35614 Aßlar (DE); Wilfing, Gerhard, 35091 Cölbe (DE)
(74) Vertreter: BASF IP Association

(56) Entgegenhaltungen:
- WO-A-2005/007906
- WO-A-2006/089222
- DE-C- 935 456
- GB-A- 756 999
- GB-A- 813 999
- US-A- 5 364 587
- US-A1- 2004 022 722

## Beschreibung

Die Erfindung betrifft ein Verfahren zur Herstellung von Legierungspulvern auf der Basis von Titan, Zirconium und/oder Hafnium, legiert mit den Elementen Ni, Cu, Ta, W, Re, Os und Ir.

Legierungspulver auf der Basis von Titan, Zirconium und Hafnium werden in der Pyroindustrie, bei der Herstellung von elektrischen Zündern, beispielsweise in Airbags und Zündverzögerungselementen, als Gettermaterialien in Vakuumröhren, in Lampen, in Vakuumapparaturen und in Gasreinigungsanlagen eingesetzt. Wegen der sehr hohen Anforderungen an die Zuverlässigkeit der oben genannten Produkte, beispielsweise Airbagzünder, ist es wünschenswert, die Legierungspulver von Charge zu Charge reproduzierbar mit gleichbleibenden Eigenschaften herzustellen, insbesondere in Bezug auf Brennzeit, Zündpunkt, mittlere Korngröße, Korngrößenverteilung und Oxidationswert. Außerdem ist es wünschenswert, die genannten Eigenschaften von vornherein auf bestimmte Werte einstellen zu können.

Die Herstellung der Legierungspulver kann durch ein kombiniertes Reduktions- und Legierungsverfahren erfolgen. Dazu wird das Oxid von Titan (TiO₂), Zirconium (ZrO₂) und/oder Hafnium (ZrO₂) zusammen mit den pulverförmigen Legierungselementen und einem Reduktionsmittel wie Calcium und/oder Calciumhydrid und/oder Magnesium und/oder Barium reduziert. Die Reduktion wird in einem geschlossenen, inertisierbaren Gefäß durchgeführt. Das oder die Reduktionsmittel werden in der Regel im Überschuss zugegeben. Nach der Reduktion werden die entstandenen Reduktionsmitteloxide durch Laugen mit Säure und nachfolgendem Waschen mit Wasser entfernt. Der Sauerstoffgehalt der erhaltenen Metalllegierungspulver liegt bei diesem Verfahren zwischen 1 und 5 %.

Alternativ können die Legierungspulver auf der Basis von Ti, Zr, Hf aus dem jeweiligen Metall durch Hydrieren und Dehydrieren gewonnen werden (HDH-Verfahren). Das jeweilige Metall wird hydriert und kann in dieser dann spröden Form zu Pulver der gewünschten Feinheit mechanisch zerkleinert werden. Um Schädigungen durch Aufnahme von Sauerstoff und Stickstoff zu vermeiden, muss zur Hydrierung hoch reiner Wasserstoff verwendet werden. Die Zerkleinerung des hydrierten Metalls auf die gewünschte Korngröße muss ebenfalls in einer reinen Schutzgasatmosphäre erfolgen, beispielsweise Helium oder Argon. Zur nachfolgenden Entfernung des Wasserstoffs und Bildung der Legierung wird das Titan-, Zirconium- oder Hafnium-Metallhydridpulver und das jeweilige zu legierende Metallhydridpulver oder Metallpulver im Vakuum bei erhöhter Temperatur zersetzt und gleichzeitig legiert.

Von Nachteil der so hergestellten Legierungspulver ist unter anderem, dass diese keine reproduzierbare Brennzeit, keine reproduzierbare spezifische Oberfläche, keine reproduzierbare Korngrößenverteilung und keinen reproduzierbaren Zündpunkt aufweisen.

Aufgabe der Erfindung ist es, die Nachteile des Standes der Technik zu überwinden.

Hierzu wird das Verfahren gemäß Anspruch 1 vorgestellt. Die Brennzeit, ausgedrückt in s/50 cm, wird dabei wie folgt bestimmt: Die zu prüfende Substanz wird zunächst zur Beseitigung störender Agglomerate über zwei Siebe mit Maschenweiten von 250 µm und 45 µm abgesiebt. Gegebenenfalls kann die Probe dabei mit einem Pinsel vorsichtig bewegt werden. Zur Bestimmung der Brennzeit wird das Feingut verwendet, welches das 45 µm-Sieb passiert hat. 15 g der Probe werden lose auf eine folgend beschriebene Metallrinne gegeben, mit einer Pappkarte glatt gestrichen und der Überschuss durch Abstreifen entfernt. Die Metallrinne ist mit zwei Markierungen versehen, die in einem Abstand von 500 mm voneinander angebracht sind. Vor der Anfangsmarkierung wird zusätzlich eine etwa erbsengroße Substanzmenge aufgetragen und mit einem Brenner entzündet. Mit Hilfe einer Zeitaufnahme wird nun die Zeit ermittelt, die der Brennvorgang zum Durchlaufen der Strecke zwischen Anfangs- und Endmarkierung benötigt. Das Analysenergebnis der Brennzeit wird in der Dimension [s/50 cm] (Sekunde pro 50 cm) angegeben. Die Brennrinne mit den Abmessungen 3 mm x 2 mm ist in einen Flachstahl mit den Abmessungen 40 mm x 9,4 mm x 600 mm eingearbeitet.

Der Zündpunkt wird dabei wie folgt bestimmt: 10 g der zu prüfenden Substanz werden in einen vorgewärmten, so genannten "Zündblock" eingebracht und es wird die Temperatur gemessen, bei der Selbstzündung eintritt. Der Zündblock, bestehend aus einem eisernen Würfel mit einer Kantenlänge von 70 mm mit Material- und Thermoelementbohrungen (20 mm und 8 mm Durchmesser, jede Bohrung 35 mm tief, Abstand der Bohrungsmittelpunkte: 18 mm), wird nach Einsetzen des Thermometers oder Thermoelements in die dafür vorgesehene Bohrung mit einem Gebläsebrenner auf eine knapp unterhalb der Zündtemperatur liegende Temperatur vorgeheizt. Dieser Punkt wird durch eine Vorprobe ermittelt. In die Materialbohrung des vorgeheizten Zündblockes wird nun eine Spatelspitze (10 g) des zu untersuchenden Metallpulvers oder Hydrides eingetragen und der Block mit maximaler Gebläseflamme so lange erhitzt, bis das Pulver sich von selbst entzündet. Die dabei erreichte Temperatur ist der Zündpunkt.

Der mittlere Korndurchmesser wird mit einem "Fisher Sub-Sieve Size Korngrößenbestimmer" (im folgenden FSSS genannt) bestimmt. Eine Beschreibung dieser Messmethode findet sich in den "Instructions, Fisher Model 95 Sub-Sieve Sizer, Catalog No. 14-311, Part No. 14579 (Rev. C), published 01-94" von Fisher Scientific. Auf diese Messbeschreibung wird hier ausdrücklich Bezug genommen.

Bevorzugt hat das Reduktionsmittel einen Mindestgehalt von 99 Gew.-%, besonders bevorzugt von 99,5 Gew.-%.

Je nach Anteil des Legierungsmittels werden pulverförmige reine Metalllegierungspulver, teilweise hydrierte Metalllegierungspulver oder Metallhydridlegierungspulver erhalten. Je höher der Wasserstoffgehalt und je höher der Anteil des Legierungselements des Verfahrensproduktes ist, desto größer ist die Brennzeit, d.h. das Metalllegierungspulver brennt langsamer, und desto höher ist der Zündpunkt (Metalllegierungspulver zündet bei höheren Temperaturen) und jeweils umgekehrt.

Die Laugung des Reaktionsproduktes wird mit konzentrierter Salzsäure vorgenommen, die bevorzugt in geringem Überschuss eingesetzt wird.

Die Erfindung wird im Folgenden an Hand von Beispielen näher erläutert:
Vergleichs-Beispiel 1: Herstellung eines Zirconium/Wolfram-Legierungspulvers, Zielzusammensetzung 50/50 (Zr/W)
21,6 kg ZrO₂ (pulverförmiges Zirconiumoxid, natürlicher Baddeleyit) mit folgenden Eigenschaften: ZrO₂ + HfO₂ min. 99,0%, HfO₂ 1,0 bis 2,0 %, SiO₂ max. 0,5 %, TiO₂ max. 0,3 %, Fe₂O₃ max. 0,1 %, Glühverlust max. 0,5 %, mittlere Korngröße (FSSS) 4 bis 6 µm, Anteil an monocliner Kristallstruktur min. 96 %, spezifische Oberfläche (nach BET) 0,5 bis 1,5 m²/g und
   16,0 kg Wolfram-Metallpulver, mit folgenden Eigenschaften: W min. 99,95 % (ohne Sauerstoff), Sauerstoff max. 0,5 %, Al max. 10 ppm, Cr max. 80 ppm, Cu max. 5 ppm, Fe max. 100 ppm, Mo max. 100 ppm, Na max. 20 ppm, Ni max. 100 ppm, Si max. 30 ppm, durchschnittliche Partikelgröße (FSSS) 0,7 µm + - 0,1 µm, Klopfdichte 0,150 bis 0,220 dm³/kg, Schüttdichte 0,570 bis 0,740 g/l und
   31,5 kg Calcium in Form von Granulat mit folgenden Eigenschaften: Ca min. 99,3 %, Mg max. 0,7 %,
   wurden zusammen in einem Mischfass 20 Minuten unter Argonatmosphäre gemischt. Dann wurde das Gemisch in einen Behälter eingetragen. Der Behälter wurde in einen Ofen eingesetzt, der nachfolgend verschlossen und mit Argon bis zu einem Überdruck von 100 hPa gefüllt wurde. Der Reaktionsofen wurde in einer Stunde auf eine Temperatur von ca. 1250 °C aufgeheizt. Sobald die Reaktionsmasse die Temperatur des Ofens erreicht hatte, begann die Reduktionsreaktion:

   ZrO₂ +2 Ca + W → ZrW + 2 CaO.

   Sechzig Minuten nach dem Einschalten der Ofenheizung wurde diese wieder abgeschaltet. Nachdem die Temperatur auf < 50 C° gefallen war, wurde die Reaktionsmasse aus dem Tiegel entfernt und mit konzentrierter Salzsäure ausgelaugt. Erhalten wurde eine Zirconium/Wolfram-Metallpulverlegierung mit folgender Analyse: 96,1 % Zr + Hf + W, 2,2 % Hf, 0,7 % O, 0,06 % H, 0,38 % Mg, 0,076 % Fe, 0,25 % Al, 1,2 µm mittlere Korngröße, Korngrößenverteilung d50: 2,8 µm, spezifische Oberfläche: 0,5 m²/g, Zündpunkt: 220°C, Brennzeit: 55 s/50 cm.
Vergleichs-Beispiel 2: Herstellung von Zirconium/Wolfram-Legierungspulver, Zielzusammensetzung 50/50 (Zr/W)
   16,2 kg ZrO₂ (pulverförmiges Zirconiumoxid) mit folgenden Eigenschaften: ZrO₂ + HfO₂ min. 99,0 %, HfO₂ 1,0 bis 2,0 %, SiO₂ max. 0,2 %, TiO₂ max. 0,25 %, Fe₂O₃ max. 0,02 %, Glühverlust max. 0,4 %, mittlere Korngröße (FSSS) 3 bis 5 µm, Anteil an monocliner Kristalistruktur min. 96 %, spezifische Oberfläche (nach BET) 3,0 bis 4,0 m²/g und
   12,0 kg Wolfram-Metallpulver mit folgenden Eigenschaften: W min. 99,95 % (ohne Sauerstoff), Sauerstoff max. 0,5 %, Al max. 10 ppm, Cr max. 80 ppm, Cu max. 5 ppm, Fe max. 100 ppm, Mo max. 100 ppm, Na max. 20 ppm, Ni max. 100 ppm, Si max. 30 ppm, durchschnittliche Partikelgröße (FSSS) 0,7 + - 0,1 µm, Klopfdichte 0,150 bis 0,220 dm³/kg, Schüttdichte 0,570 bis 0,740 g/l und
   7,2 kg Mg (Magnesium in Form von Spänen) mit folgenden Eigenschaften: Mg min. 99,5 %, Schüttdichte max. 0,3 bis 0,4 g/cm³
   wurden analog Beispiel 1 in einem Behälter in den Ofen eingesetzt. Der Ofen wurde auf 1050 °C aufgeheizt. Sobald die Reaktionsmasse die Temperatur des Ofens erreicht hatte, begann die Reduktionsreaktion:

   ZrO₂ + 2Mg + W → ZrW + 2MgO

   Die Ofenheizung wurde 20 Minuten nach Start der Reduktion abgeschaltet. Nachdem die Temperatur auf < 50 °C gefallen war, wurde die Reaktionsmasse aus dem Tiegel entfernt und mit konzentrierter Salzsäure ausgelaugt. Erhalten wurde eine Zirconium/Wolfram-Metallpulverlegierung mit folgender Analyse: 97,9% Zr + Hf + W, 53 % Zr, 0,9 % Hf, 44 % W, 0,083 % Fe, 0,075 % Al, 0,19 % Mg, 0,087 % Si, 0,04 % H, mittlere Korngröße 1,2 µm, Korngrößenverteilung d50: 2,6 µm, Zündpunkt: 200 °C, Brennzeit: 44 s/50 cm.
Vergleichs-Beispiel 3: Herstellung von Zirconium/Wolfram-Legierungspulver, Zielzusammensetzung 40/60 (Zr/W) 13,0 kg ZrO₂ (pulverförmiges Zirconiumoxid) mit folgenden Eigenschaften: ZrO₂ + HfO₂ min. 99,0 %, HfO₂ 1,0 bis 2,0 %, SiO₂ max. 0,2 %, TiO₂ max. 0,25 %, Fe₂O₃ max. 0,02 %, Glühverlust max. 0,4 %, mittlere Korngröße (FSSS) 3 bis 5 µm, Anteil an monocliner Kristallstruktur min. 96 %, spezifische Oberfläche (nach BET) 3,0 bis 4,0 m²/g) und
   14,4 kg W Metallpulver mit folgenden Eigenschaften: W min. 99,95 % (ohne Sauerstoff), Sauerstoff max. 0,5 %, Al max. 10 ppm, Cr max. 80 ppm, Cu max. 5 ppm, Fe max. 100 ppm, Mo max. 100 ppm, Na max. 20 ppm, Ni max. 100 ppm, Si max. 30 ppm, durchschnittliche Partikelgröße (FSSS) 0,7 + - 0,1 µm, Klopfdichte 0,150 bis 0,220 dm³/kg, Schüttdichte 0,570 bis 0,740 g/l und
   5,8 kg Mg (Magnesium in Form von Spänen) mit folgenden Eigenschaften: Mg min. 99,5 %, Schüttdichte max. 0,3 bis 0,4 g/cm³
   wurden analog Beispiel 1 in einem Behälter in den Ofen eingesetzt. Der Ofen wurde auf 1050 °C aufgeheizt. Sobald die Reaktionsmasse die Temperatur des Ofens erreicht hatte, begann die Reduktionsreaktion:

   ZrO₂ + 2 Mg + W → ZrW + 2MgO

   Die Ofenheizung wurde 20 Minuten nach Start der Reduktion abgeschaltet. Nachdem die Temperatur auf < 50 °C gefallen war, wurde die Reaktionsmasse aus dem Tiegel entfernt und mit konzentrierter Salzsäure ausgelaugt. Erhalten wurde eine Zirconium/Wolfram-Metallpulverlegierung mit folgender Analyse: 97,8 % Zr + Hf + W, 41 % Zr, 0,78 % Hf, 56 % W, 0,028 % Fe, 0,090 % Al, 0,14 % Mg, 0,097 % Si, 0,14 % H, 1,2 µm mittlere Korngröße, Korngrößenverteilung d50: 2,2 µm, Zündpunkt: 200 °C, Brennzeit: 37 s/50 cm.
Beispiel 4: Herstellung von Zirconium/Nickel-Legierungspulver, Zielzusammensetzung 70/30 (Zr/Ni)
   36 kg ZrO₂ (pulverförmiges Zirconiumoxid) mit folgenden Eigenschaften: ZrO₂ + HfO₂ min. 98,5%, HfO₂ 1,0 bis 2,0 %, SiO₂ max. 0,6 %, TiO₂ max. 0,15 %, Fe₂O₃ max. 0,05 %, Na₂ bis max. 0,3 %, Glühverlust max. 0,5 %, mittlere Korngröße (FSSS) 1,7 bis 2,3 µm und
   26,4 kg Ca (Calcium in Form von Spänen) mit folgenden Eigenschaften: Ca min. 98,5%, Mg max. 0,5 % und
   2,0 kg Mg (Magnesium in Form von Spänen) mit folgenden Eigenschaften: Mg min. 99,5 %, Schüttdichte max. 0,3 bis 0,4 g/cm³
   wurden zusammen in einem Mischfass 20 Minuten unter Argonatmosphäre gemischt. Dann wurde das Gemisch in einen Behälter eingetragen. Der Behälter wurde in einen Ofen eingesetzt, der nachfolgend verschlossen und mit Argon bis zu einem Überdruck von 100 hPa gefüllt wurde. Der Reaktionsofen wurde in einer Stunde auf eine Temperatur von ca. 1250 °C aufgeheizt. Sobald die Reaktionsmasse die Temperatur des Ofens erreicht hatte, begann die Reduktionsreaktion:

   ZrO₂ + 2 Ca/Mg → Zr + 2 CaO/MgO

   Sechzig Minuten nach dem Einschalten der Ofenheizung wurde diese wieder abgeschaltet. Nachdem die Temperatur auf < 50 C° gefallen war, wurde die Reaktionsmasse aus dem Tiegel entfernt und mit
   13 kg Ni (Pulver) mit folgenden Eigenschaften: C max. 0,1 %, Fe max. 0,01 %, O max. 0,15 %, S max. 0,002 %, mittlere Korngröße (FSSS) 4 bis 6 µm in einem Mischer 30 min gemischt.
   Dann wurde das Gemisch in einen Behälter eingetragen. Der Behälter wurde in einen Ofen eingesetzt, der nachfolgend verschlossen und mit Argon bis zu einem Überdruck von 100 hPa gefüllt wurde. Der Reaktionsofen wurde auf Temperaturen von 500 °C bis 1000 °C aufgeheizt. Nach Beendigung der Legierungsreaktion:

   Zr + 2 CaO/MgO + Ni → ZrNi + 2 CaO/MgO

   wurde die Reaktionsmasse aus dem Tiegel entfernt und mit konzentrierter Salzsäure ausgelaugt. Erhalten wurde ein Zirconium/Nickel-Legierungspulver mit folgender Analyse: 98,3 % Zr + Ni (inkl. Hf), Zr 70,2 %, Ni 28,1 %, Hf 1,4 %, Ca 0,09 %, Fe 0,046 %, Al 0,13 %, S 0,003 %, Brennzeit: 210 s/50 cm, Zündpunkt: 40 °C, mittlere Korngröße (FSSS): 4,2 µm.
Vergleichs-Beispiel 5: Herstellung von Titan/Kupfer-Legierungspulver, Zielzusammensetzung 75/25 (Ti/Cu)
   1,2 kg TiH₂ (pulverförmiges Titanhydrid) mit folgenden Eigenschaften: TiH₂ min. 98,8 %, H min. 3,8 %, N max. 0,3 %, Mg max. 0,04 %, Fe max. 0,09 %, Cl max. 0,06 %, Ni max. 0,05 %, Si max. 0,15 %, C max. 0,03 %, mittlere Korngröße (FSSS) 3 bis 6 µm und
   10,0 kg Cu (Kupfer in Form von Pulver) mit folgenden Eigenschaften: Cu min. 99,3 %, Schüttdichte 2,6 bis 2,8 kg/dm³, Siebanalyse 325 mesh 50 bis 65 µm, Siebanalyse 150 mesh 10 bis 20 µm
   wurden zusammen in einem Mischfass 20 Minuten unter Argonatmosphäre gemischt. Dann wurde das Gemisch in Chargen von 5 kg auf Bleche aufgebracht. Die Bleche wurden in einen Ofen eingesetzt, der nachfolgend verschlossen und mit Argon bis zu einem Oberdruck von 100 hPa gefüllt wurde. Danach erfolgte die Evakuierung des Ofens. Der Reaktionsofen wurde in mehreren Schritten innerhalb von 6 Stunde unter Vakuum auf eine max. Temperatur von ca. 800 °C aufgeheizt. Die Reaktion läuft folgendermaßen ab:

   TiH₂ + Cu → TiCu + H₂

   Nach ungefähr 4 h (abhängig vom Druck im Ofen) wurde die Ofenheizung abgeschaltet. Nachdem der Ofen auf Raumtemperatur abgekühlt war wurde die Masse herausgenommen und die Agglomerate aufgebrochen. Erhalten wurde eine TiCu-Legierung mit folgender Analyse: 72,4 % Ti, 25,3 % Cu, 1,4 % O, 0,02 % H, 0,05 % Al, 0,02 % Fe, 0,005 % Mg, Cd < 0,001 %, Zn < 0,002 %, Hg < 0,0002 %, Korngrößenverteilung d50: 17,7 %, mittlere Korngröße (FSSS): 9,4 µm.

## Patentansprüche

1. Verfahren zur Herstellung von Legierungspulvern auf der Basis von Zirconium, legiert mit dem Element Ni, **dadurch gekennzeichnet, dass** 36 kg ZrO₂ mit folgenden Eigenschaften: ZrO₂ und HfO₂ min. 98,5%, HfO₂ 1,0 bis 2,0 %, Si0₂ max. 0,6 %, TiO₂ max. 0,15 %, Fe₂O₃ max. 0,05 %, Na 2 bis max. 0,3 %, Glühverlust max. 0,5 %, mittlere Korngröße (FSSS) 1,7 bis 2,3 µm, mit 26,4 kg Calcium in Form von Spänen mit folgenden Eigenschaften: Ca min. 98,5 %, Mg max. 0,5 % und 2,0 kg Magnesium in Form von Spänen mit folgenden Eigenschaften: Mg min. 99,5 %, Schüttdichte max. 0,3 bis 0,4 g/cm³, in einem Mischfass 20 Minuten unter Argonatmosphäre gemischt wird, dieses Gemisch in einen Behälter eingetragen, nachfolgend verschlossen und mit Argon bis zu einem Überdruck von 100 hPa gefüllt, in einem Ofen in einer Stunde auf eine Temperatur von 1250 °C aufgeheizt, sechzig Minuten nach dem Einschalten der Ofenheizung diese wieder abgeschaltet und, nachdem die Temperatur auf weniger als 50 C° gefallen ist, die Reaktionsmasse aus dem Tiegel entfernt, mit 13 kg Ni-Pulver mit folgenden Eigenschaften: C max. 0,1 %, Fe max. 0,01 %, O max. 0,15 %, S max. 0,002 %, mittlere Korngröße (FSSS) 4 bis 6 µm in einem Mischer 30 min gemischt, das Gemisch in einen Behälter eingetragen, der Behälter in einen Ofen eingesetzt, der nachfolgend verschlossen und mit Argon bis zu einem Überdruck von 100 hPa gefüllt wird, wobei der Reaktionsofen auf Temperaturen von 500 °C bis 1000 °C aufgeheizt wird sowie nach Beendigung der Legierungsreaktion die Reaktionsmasse aus dem Tiegel entfernt und mit konzentrierter Salzsäure gelaugt und anschließend gewaschen und getrocknet wird, wobei ein Zirconium/Nickei-Legierungspulver mit folgender Analyse: 98,3 % Zr und Ni inklusive HF, Zr 70,2 %, Ni 28,1 %, Hf 1,4 %, Ca 0,09 %, Fe 0,046 %, Al 0,13 %, S 0,003 %, Brennzeit: 210 s/50 cm, Zündpunkt: 240°C, mittlere Korngröße (FSSS): 4,2 µm erhalten wird.

## Claims

1. Process for producing alloy powders based on zirconium, alloyed with the element Ni, **characterised in that** 36 kg of ZrO₂ having the following properties: ZrO₂ and HfO₂ min. 98.5%, HfO₂ 1.0 to 2.0%, SiO₂ max. 0.6%, TiO₂ max. 0.15%, Fe₂O₃ max. 0.05%, Na₂ to max. 0.3%, ignition loss max. 0.5%, average particle size (FSSS) 1.7 to 2.3 µm, are mixed together with 26.4 kg of calcium in the form of chips having the following properties: Ca min. 98.5%, Mg max. 0.5%, and 2.0 kg of magnesium in the form of chips having the following properties: Mg min. 99.5%, bulk density max. 0.3 to 0.4 g/cm³, in a mixing vessel for 20 minutes under an argon atmosphere, this mixture is introduced into a container, then sealed and filled with argon to an excess pressure of 100 hPa, heated in an oven to a temperature of 1250°C over one hour, sixty minutes after the oven heating is switched on it is switched off again and, once the temperature has fallen to below 50°C, the reaction mass is removed from the crucible, mixed with 13 kg of Ni powder having the following properties: C max. 0.1%, Fe max. 0.01%, O max. 0.15%, S max. 0.002%, average particle size (FSSS) 4 to 6 µm, in a mixer for 30 minutes, the mixture is introduced into a container, the container is placed in an oven, which is then sealed and filled with argon to an excess pressure of 100 hPa, the reaction oven is heated to temperatures of 500°C to 1000°C, and after completion of the alloying reaction the reaction mass is removed from the crucible and leached with concentrated hydrochloric acid and then washed and dried, wherein a zirconium/nickel alloy powder with the following analysis is obtained: 98.3% Zr and Ni including Hf, Zr 70.2%, Ni 28.1%, Hf 1.4%, Ca 0.09%, Fe 0.046%, Al 0.13%, S 0.003%, burning time: 210 s/50 cm, ignition temperature: 240°C, average particle size (FSSS): 4.2 µm.

## Revendications

1. Procédé de préparation de poudres d'alliage à base de zirconium allié à de l'élément nickel, **caractérisé en ce qu'**on mélange 36 kg d'un oxyde de zirconium présentant les propriétés suivantes :
au minimum 98,5 % de ZrO₂ et HfO₂, 1,0 à 2,0 % de HfO₂,
au maximum 0,6 % de SiO₂, au maximum 0,15 % de TiO₂,
au maximum 0,05 % de Fe₂O₃, au maximum 0,3 % de Na₂,
au maximum 0,5 % de perte au recuit, taille moyenne de grains (FSSS) de 1,7 à 2,3 µm
avec 26,4 kg de calcium en tournures, présentant les propriétés suivantes :
au minimum 98,5 % de Ca, au maximum 0,5 % de Mg et 2,0 kg de magnésium en tournures, présentant les propriétés suivantes :
au minimum 99,5 % de Mg, masse volumique en vrac, au maximum, de 0,3 à 0,4 g/cm³
dans une cuve de mélange, pendant 20 minutes et sous atmosphère d'argon, on introduit ce mélange dans un récipient qui est ensuite fermé et rempli avec de l'argon jusqu'à une surpression de 100 hPa, on chauffe le tout dans un four pour le porter en une heure à une température de 1250 °C, on interrompt le chauffage au four 60 minutes après son démarrage, et une fois la température redescendue à moins de 50 °C, on retire du creuset la masse réactionnelle, on la mélange pendant 30 minutes, dans un mélangeur, avec 13 kg de nickel en poudre présentant les propriétés suivantes :
au maximum 0,1 % de C, au maximum 0,01 % de Fe,
au maximum 0,15 % de O, au maximum 0,002 % de S, taille
moyenne de grains (FSSS) de 4 à 6 µm
on introduit ce mélange dans un récipient, on dispose ce récipient dans un four qui est ensuite fermé et rempli avec de l'argon jusqu'à une surpression de 100 hPa, le four-réacteur est chauffé à des températures de 500 °C à 1000 °C, et une fois terminée la réaction de formation d'alliage, on retire du creuset la masse réactionnelle, on lui fait subir une lixiviation avec de l'acide chlorhydrique concentré, et ensuite on la lave et on la fait sécher, obtenant ainsi un alliage de zirconium et de nickel en poudre qui présente la composition suivante : 98,3 % de Zr et Ni, y compris Hf, 70,2 % de Zr, 28,1 % de Ni, 1,4 % de Hf, 0,09 % de Ca, 0,046 % de Fe, 0,13 % de Al, 0,003 % de S, ainsi qu'une durée de combustion de 210 s pour 50 cm, un point d'ignition de 240 °C, et une taille moyenne de grains (FSSS) de 4,2 µm.
